# FASCICULE DE BREVET EUROPEEN

(11) **EP 1 527 920 B1**
(45) Date de publication et mention de la délivrance du brevet: **14.11.2007**
(21) Numéro de dépôt: 04292305.2
(22) Date de dépôt: 27.09.2004
(51) Int. Cl.: B60J 1/14

(54) **Ensemble de fermeture de la baie d'une carrosserie**
Abschlussvorrichtung für eine Karosserieöffnung
Closing assembly of a vehicle body opening

(30) Priorité: 20.10.2003 FR 0312255
(43) Date de publication de la demande: 04.05.2005
(73) Titulaire: Euramax Industries S.A., 49260 Montreuil-Bellay (FR)
(72) Inventeur: Logeais, Jean-Francois, 49400 Saumur (FR)
(74) Mandataire: Maillet, Alain

(56) Documents cités:
- EP-A- 0 778 168
- EP-A- 0 956 987
- EP-A- 1 063 111
- FR-A- 2 787 498
- FR-A- 2 804 379

## Description

L'invention porte sur un ensemble de fermeture de baie de carrosserie de véhicule, en particulier de véhicules utilitaires, tels que des bus ou des cars de transport public ou privé.

La tendance actuelle, qui est de proposer des véhicules donnant l'impression d'être ouverts sur l'extérieur, a entraîné le recours toujours plus important au verre comme matériau, et ceci, sur de plus grandes surfaces.

Ainsi, lorsqu'il s'agit de refermer une baie par un panneau fixe, on utilise un panneau de verre relié par sa périphérie aux bords de la carrosserie qui délimitent la baie, par exemple par collage direct ou par montage sur un entourage intermédiaire.

Dans le cas où la présence d'un volet d'aération est à inclure dans l'ensemble de fermeture, il est usuel de le placer le long d'un côté de l'ensemble de fermeture, souvent le long du côté supérieur du panneau de verre fixe, en l'entourant d'un cadre métallique qui constitue, pour le montage sur la carrosserie, le prolongement de la périphérie du panneau fixe.

Cet entourage métallique limite donc l'impression de transparence et d'ouverture autour du volet d'aération.

Un exemple de cette technique antérieure est divulgué par le document FR 2787498.

La présente invention a pour objectif de fournir un ensemble de fermeture de baie qui permet à la fois d'entourer le volet mobile par un panneau fixe qui peut être en verre et de répondre à des critères de sécurité empêchant la chute du volet mobile en cas de bris du panneau fixe.

A cet effet, selon la présente invention, est prévu un ensemble de fermeture d'une baie, en particulier une baie pratiquée dans la carrosserie d'un véhicule, comprenant un panneau fixe délimitant une ouverture éloignée de la périphérie du panneau fixe, un volet mobile apte à venir obturer ladite ouverture, des moyens de liaison reliés au volet et au moins un profilé solidaire du panneau fixe, lesdits moyens de liaison coopérant avec ledit profilé de façon que ledit volet se déplace entre une position de fermeture et une position d'ouverture.

De façon caractéristique, l'ensemble comporte en outre un dispositif de sécurité destiné à permettre de retenir ensemble le volet, lesdits moyens de liaison, le profilé et ledit panneau, ledit profilé étant monté par chevauchement serré sur le bord de l'ouverture en dépassant sur la face du panneau tournée vers l'extérieur du véhicule, et ledit dispositif de sécurité est solidaire d'une part du profilé et d'autre part du panneau.

On comprend qu'en cas de bris de la partie inférieure du panneau fixe, grâce au dispositif de sécurité, les autres éléments appartenant à l'ensemble de fermeture, à savoir la partie supérieure du panneau fixe, le volet, les moyens de liaison, le profilé et le dispositif de sécurité, sont retenus les uns aux autres et à la carrosserie du véhicule.

Ainsi, en particulier lorsque le panneau fixe est en verre, l'invention permet de répondre simplement aux exigences de sécurité car en cas de bris de glace au niveau de la partie inférieure du panneau fixe, le volet est retenu notamment à la carrosserie.

De plus, il apparaîtra plus clairement de la description détaillée qui suit que le dispositif de sécurité n'étant pas monté directement sur la carrosserie, un choc localisé ne remet pas en cause la retenue du volet puisque celui-ci reste en place par l'intermédiaire du dispositif de sécurité et de la partie supérieure du panneau fixe qui est montée sur la carrosserie par une zone d'attache étendue.

De façon préférentielle, ledit panneau comporte au moins une première partie (partie inférieure) et une deuxième partie (partie supérieure) séparée, ladite première partie étant destinée à refermer la majeure partie de la surface de ladite baie, ledit profilé dépasse sur la face de la première partie du panneau tournée vers l'extérieur du véhicule et ledit dispositif de sécurité est solidaire de la deuxième partie du panneau.

Cette disposition correspond à l'agencement du panneau fixe en au moins deux morceaux séparés mais le cas dans lequel le panneau fixe est en un seul morceau est également prévu conformément à la présente invention.

De préférence, dans sa position de fermeture, ledit volet est dans le plan du panneau fixe.

Selon une disposition préférentielle, ledit dispositif de sécurité est monté au moins sur la face extérieure de la deuxième partie du panneau et sur chaque extrémité dudit profilé.

Selon une solution préférentielle, ledit dispositif de sécurité chevauche et enserre le bord de la deuxième partie du panneau, à savoir les deux faces et la tranche. De cette manière, en effet, on réalise le montage du dispositif de sécurité de manière simple et directe, sans autre élément extérieur.

Selon une autre solution alternative ou cumulative avec celle qui précède, ledit dispositif de sécurité est collé sur la face de la deuxième partie du panneau tournée vers l'extérieur du véhicule.

Selon une autre disposition avantageuse, mais non systématique, l'ensemble comprend en outre des éléments d'assemblage reliant la première partie à ladite deuxième partie du panneau fixe, écartés dudit dispositif de sécurité et dudit profilé, et montés, de préférence par collage, sur la face du panneau fixe tournée vers l'intérieur du véhicule.

De tels éléments d'assemblage permettent de relier, éventuellement de manière provisoire avant et pendant le montage de l'ensemble sur la carrosserie, les première et deuxième parties du panneau fixe.

Selon un premier mode de réalisation, lesdits moyens de liaison forment la partie mobile d'une charnière dont la partie fixe est formée par ledit profilé, lesdits moyens de liaison chevauchant le bord de la deuxième partie du panneau fixe. Dans ce cas, on réalise un volet mobile par basculement. De préférence, la deuxième partie du panneau fixe est en une seule pièce.

Selon un deuxième mode de réalisation, l'ensemble comprend deux profilés parallèles montés par chevauchement serré sur le bord de l'ouverture, sur le bord de la première partie du panneau fixe et/ ou de la deuxième partie du panneau fixe, en formant deux rails de guidage, lesdits moyens de liaison comprenant au moins deux éléments coulissants ou roulants montés sur deux bords parallèles du volet et aptes à se déplacer dans lesdits rails de guidage. Dans ce cas, on réalise un volet mobile par coulissement le long des rails de guidage.

Selon une première alternative du deuxième mode de réalisation, la deuxième partie du panneau fixe est réalisée en trois pièces qui sont chacune adjacente à un côté différent de ladite ouverture et lesdits profilés sont montés de façon serrée sur le bord de la deuxième partie du panneau fixe.

Selon une deuxième alternative du deuxième mode de réalisation, la première partie du panneau fixe et la deuxième partie du panneau fixe sont réalisées en une seule pièce, l'un desdits profilés étant monté sur le bord de la première partie du panneau fixe, l'autre desdits profilés étant monté sur le bord de la deuxième partie du panneau fixe.

Selon d'autres alternatives du premier mode de réalisation, les dispositions suivantes sont en outre adoptées, seules ou en combinaison :
- ledit dispositif de sécurité comporte une prolongation s'étendant en direction du bord supérieur du panneau, sur la face tournée vers l'intérieur du véhicule, au moins le long du volet mobile, ce par quoi on réalise le long de ladite prolongation un guidage d'un éventuel écoulement d'eau en direction dudit profilé ;
- ledit dispositif de sécurité comporte, en outre, un tirant s'étendant depuis ladite prolongation en direction du bord supérieur du panneau jusqu'à un premier élément d'accouplement et un élément de retenue disposé sur la face du panneau tournée vers l'extérieur du véhicule équipé d'un deuxième élément d'accouplement, un perçage étant ménagé dans ledit panneau, au travers duquel ledit premier élément d'accouplement coopère avec ledit deuxième élément d'accouplement ;
- un perçage supplémentaire est ménagé dans ledit panneau et ledit élément de retenue est équipé d'une saillie apte à pénétrer dans ledit perçage supplémentaire ; et,
- de la colle est disposée entre ledit élément de retenue et la face du panneau tournée vers l'extérieur.

D'autres avantages et caractéristiques de l'invention ressortiront à la lecture de la description suivante faite à titre d'exemple et en référence aux dessins annexés dans lesquels :
- la figure 1 est une vue générale, depuis l'extérieur d'un véhicule, du premier mode de réalisation de l'ensemble selon la présente invention, dans la position fermée du volet mobile,
- les figures 2 à 5 sont des vues en coupe partielles, respectivement selon les directions II-II, III-III, IV-IV et V-V de la figure 1,
- la figure 3A est une vue identique à celle de la figure 3 pour une première variante de réalisation,
- la figure 6 est une vue générale, depuis l'extérieur d'un véhicule, du deuxième mode de réalisation de l'ensemble selon la présente invention, dans une position intermédiaire entre la position fermée et la position ouverte du volet mobile,
- les figures 7 à 9 et 11 sont des vues en coupe partielles, respectivement selon les directions VII-VII, VIII-VIII, IX-IX et XI-XI de la figure 6,
- la figure 10 est une vue en section selon la direction X-X de la figure 6,
- les figures 12 et 13 sont des vues en coupe transversale similaires à celle de la figure 3 représentant respectivement une deuxième et une troisième variante du premier mode de réalisation.

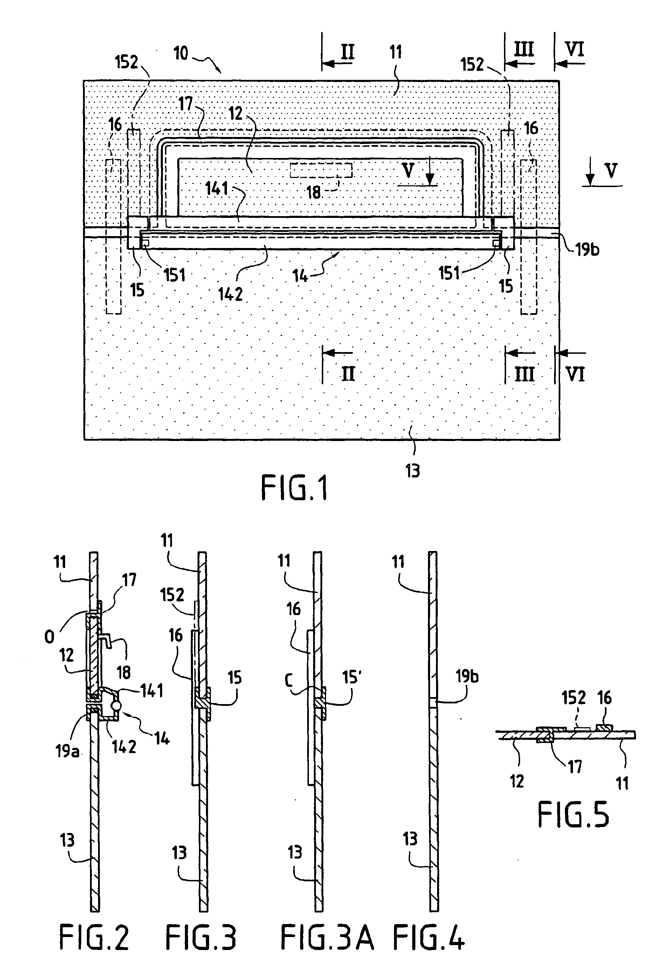

Un premier mode de réalisation de l'ensemble de fermeture selon l'invention est illustré sur les figures 1 à 5.

L'ensemble 10 est représenté sur la figure 1 depuis sa face qui est destinée à être tournée vers l'extérieur du véhicule, après montage de l'ensemble sur les bords d'une baie, c'est à dire d'une ouverture pratiquée dans la carrosserie d'un véhicule.

Ni la baie ni la carrosserie ne sont représentés mais les modes de montage déjà connus de l'homme de l'art d'un panneau fixe sur une baie peuvent être mis en oeuvre sans changement : par exemple la périphérie du panneau fixe est reliée à une pièce intermédiaire de fixation déjà montée sur la carrosserie, telle qu'un cadre, ou bien la périphérie du panneau fixe est directement collée sur les bords de la carrosserie qui délimitent la baie.

Comme il ressort de la figure 1, l'ensemble 10 est formé d'un panneau fixe, en deux parties, respectivement supérieure 11 et inférieure 13 entre lesquelles est délimitée une ouverture O obturable par un volet mobile 12 basculant.

Cette ouverture O est éloignée de la périphérie du panneau fixe c'est-à-dire qu'elle ne débouche pas sur cette périphérie, l'ouverture ne constituant pas un côté ou un coin du panneau fixe.

De préférence le panneau fixe 11, 13 et le volet 12 sont formés par des panneaux en verre, la partie supérieure 11 ayant une forme de U retourné et la partie inférieure 13 étant rectangulaire.

La périphérie (contour extérieur) du panneau fixe 11, 13 est laissée libre pour permettre d'effectuer le montage précité sur la baie délimitée dans la carrosserie du véhicule.

Une traverse formant charnière 14 relie le volet 12 à la partie inférieure 13 du panneau fixe. Cette charnière 14 comporte, en bas sur les figures 1 et 2, un profité fixe 142 et, en haut sur les figures 1 et 2, un autre profilé 141 formant des moyens de liaison pour le volet, et qui est mobile.

Le profilé 141 mobile est chaussé (montage serré par chevauchement de la tranche) sur toute la longueur du bord inférieur du volet 12, tandis que le profilé fixe 142 est chaussé (montage serré par chevauchement de la tranche) sur la partie centrale du bord supérieur de la partie inférieure 13 du panneau fixe (voir figure 2). Ce montage par chaussement ou pincement est donc réalisé sans autre élément de fixation extérieure (vis,rivet, colle...), mais simplement du fait que les profilées 141 et 142 présent une section transversale en forme de U dont les dimensions permettent de réaliser une complémentarité de forme avec le bord des panneaux de verre constituant le volet 12 et la partie inférieure 13 du panneau fixe, c'est à dire par recouvrement (serré) du chant et des deux faces de ces panneaux.

Ainsi, on comprend que ces profilés 141, 142 forment la charnière 14 permettant le basculement du panneau mobile 12 entre une position d'ouverture (non représentée mais située vers la droite sur la figure 2) et une position de fermeture (ressortant tout particulièrement des figures 1 et 2) dans laquelle le volet 12 est dans le même plan que le panneau fixe 11, 13.

Un joint ou un mastic d'étanchéité 19a, ne constituant pas de la colle, peut être ajouté au fond du U pour assurer l'étanchéité entre les profilés 141, 142 et les panneaux 12 et 13.

En particulier, comme il apparaît sur la figure 2, la portion du profilé 142 appartenant à la charnière 14, qui est chaussée sur la partie inférieure 13 du panneau fixe déborde sur la face extérieure (à gauche sur la figure 2) de la partie inférieure 13 du panneau fixe en venant créer une surépaisseur de matière qui permet l'appui de la charnière 14.

Pour manoeuvrer le volet d'aération mobile 12 par basculement, une poignée 18 est collée sur la face interne du volet mobile 12 (voir figures 1 et 2).

Un joint d'étanchéité 17, monté sur un cadre en aluminium en forme de U retourné, entoure le haut et les côtés latéraux du volet mobile 12 (voir figures 1 et 2), les extrémités libres de ce joint 17 venant jusqu'à la charnière 14.

Un dispositif de sécurité est formé par deux capots 15 (voir figures 1 et 3) qui présentent, dans leur portion la plus proche de la périphérie du panneau fixe 11, 13 sur la figure 1, une section transversale en forme de h retourné (voir figure 3). Ainsi, cette section transversale présente une partie supérieure en forme de U qui est chaussée (montage serré par chevauchement de la tranche) sur la zone du bord inférieur de la partie supérieure 11 du panneau fixe qui est adjacente au volet mobile 12.

La partie inférieure du capot 15 présente une extrémité 151, dans la portion la plus éloignée de la périphérie du panneau fixe 11, 13 sur la figure 1, formée d'un axe qui est fixé (montage serré, par exemple par vissage) dans l'extrémité ouverte du profilé fixe 142, ce qui assure son obturation et permet de solidariser les capots 15 à la charnière 14.

De cette manière, en cas de bris de la partie inférieure 13 du panneau fixe, il y a une retenue entre la partie supérieure 11 du panneau fixe, le volet mobile 12, la charnière 14 (profilés 141 et 142) et les capots 15.

Alternativement, comme il est représenté sur la figure 3A, le dispositif de sécurité présente des capots 15' ayant, dans leur portion la plus proche de la périphérie du panneau fixe 11, 13 sur la figure 1, une section transversale en forme de T couché dont l'aile supérieure est collée (colle C) au moins sur la face externe de la partie supérieure 11 du panneau fixe. Ces deux capots 15' sont comme, les capots 15, solidaires de la charnière 14 afin d'assurer également la fonction de sécurité en retenant entre eux les éléments 11, 12, 14 et 15' lorsque la partie inférieure 13 du panneau fixe est brisée.

De façon accessoire, deux montants d'assemblage 16 (voir figures 1, 3 et 5) destinés à renforcer la cohésion entre les parties supérieure et inférieure 11, 13 du panneau fixe, au moins avant le montage de l'ensemble 10 sur un véhicule, sont collés verticalement sur la face interne des deux parties 11, 13 du panneau fixe, de part et d'autre de la charnière 14 et du volet mobile 12, à l'écart du dispositif de sécurité formé des capots 15 ou 15'.

Un mastic d'étanchéité 19b (visible sur la figure 4) vient finir de refermer l'interstice existant entre les deux parties supérieure et inférieure 11, 13 du panneau fixe en dehors de l'emplacement de la charnière 14 et des capots 15 ou 15'.

Selon une variante de réalisation, les capots 15 (ou 15') présentent une extension verticale sous la forme d'une prolongation (152) le long du panneau mobile 12, sur la face de la partie supérieure 11 du panneau fixe tournée vers l'intérieur (voir figures 1, 3 et 5) : cette prolongation 152 sert à acheminer toute fuite d'eau (notamment de l'eau ayant pénétré par l'ouverture O) située à l'intérieur du véhicule en direction du logement délimité par le profilé fixe 142, via l'axe 151 formant l'extrémité du capot 15.

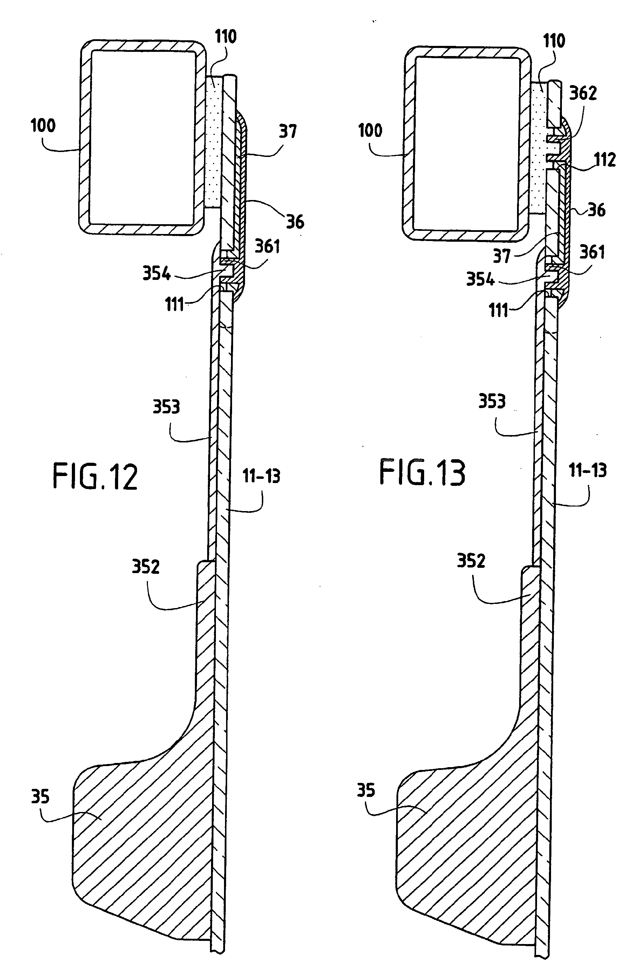

On se reporte maintenant aux figures 12 et 13 représentant deux variantes de réalisation du dispositif de sécurité selon une vue en coupe verticale proche de celle de la figure 3, partielle (seulement la partie supérieure) et après montage sur un véhicule dont une partie 100 de la carrosserie est visible.

Dans ce cas, un capot 35 est situé à chaque extrémité du profilé fixe 142, en étant solidarisé à ce dernier au moyen d'un axe ou d'une vis, de la même façon que l'extrémité 151 du capot 15 (figure 1).

Le capot 35 s'étend, au moyen d'une prolongation verticale 352, tout le long du bord latéral du volet mobile 12 et peut servir de guide pour une éventuelle fuite d'eau de la même façon que la prolongation 152 présentée précédemment.

La prolongation 352 s'étend encore plus haut en direction verticale par un tirant 353, plus fin, dont l'extrémité porte un premier élément d'accouplement 354 formé d'une saillie ou d'une vis qui traverse la partie supérieure du panneau fixe 11 au niveau d'un perçage 111. De l'autre côté de la partie supérieure du panneau fixe 11 (face tournée vers l'extérieur), un élément de retenue 36 formé d'un capot vertical présente dans sa partie d'extrémité inférieure un deuxième élément d'accouplement 361, tel qu'une saillie équipée d'un logement, apte à coopérer de manière réversible avec le premier élément d'accouplement 354.

De cette façon, on comprend que l'élément de retenue 36 et le tirant 353 sont solidarisés entre eux et à la portion haute de la partie supérieure du panneau fixe 11, ce par quoi on renforce la retenue du profilé 142 et des éléments qui lui sont attachés, à la portion haute de la partie supérieure du panneau fixe 11.

De préférence, de la colle 37 est placée entre l'élément de retenue 36 et la face du panneau fixe 11 tournée vers l'extérieur.

Avantageusement, même si l'élément de retenue 36 ne s'étend pas jusqu'au bord supérieur du panneau fixe 11, il s'étend en regard du cordon de colle 110 reliant le panneau fixe 11 à la carrosserie 100.

Dans ce cas, avantageusement, comme il apparaît sur la figure 13 représentant une troisième variante du premier mode de réalisation, en plus des caractéristiques déjà décrites précédemment en relation avec la deuxième variante du premier mode de réalisation, l'élément de retenue 36 comporte, en outre, dans sa partie d'extrémité supérieure, une saillie de fixation 362 logée dans un autre perçage 112 du panneau fixe 11, en regard du cordon de colle 110 situé entre le panneau fixe 11 et la carrosserie 100 et qui vient donc solidariser l'élément de retenue 36 à la face du panneau fixe 11 tournée vers l'intérieur du véhicule.

Sur les figures 12 et 13, il est prévu que le panneau fixe n'est formé qu'en un seul morceau comprenant la partie supérieure 11 et la partie inférieure 13, l'ouverture O ayant un contour fermé à l'intérieur de ce panneau fixe en une seule pièce.

Cependant les variantes des figures 12 et 13 visent également le cas dans lequel le panneau fixe est en plusieurs morceaux, et en particulier en une première partie 13 inférieure et en une deuxième partie 11 supérieure séparées au départ.

Du fait de l'assemblage qui vient d'être décrit en relation avec les figures 12 et 13, on comprend que les deux prolongations 352 et les deux tirants 353 n'ont pas besoin d'être fixés directement au panneau fixe autrement que par la coopération entre le premier élément d'accouplement 354 et le deuxième élément d'accouplement 361. Cependant, il est préférable de mettre un joint ou un mastic d'étanchéité notamment pour éviter les bruits liés à des vibrations des deux prolongations 352 et/ou des deux tirants 353 contre la face intérieure de la partie supérieure 11 du panneau fixe. Egalement, il est envisageable de les coller sur la face intérieure de la partie supérieure 11 du panneau fixe.

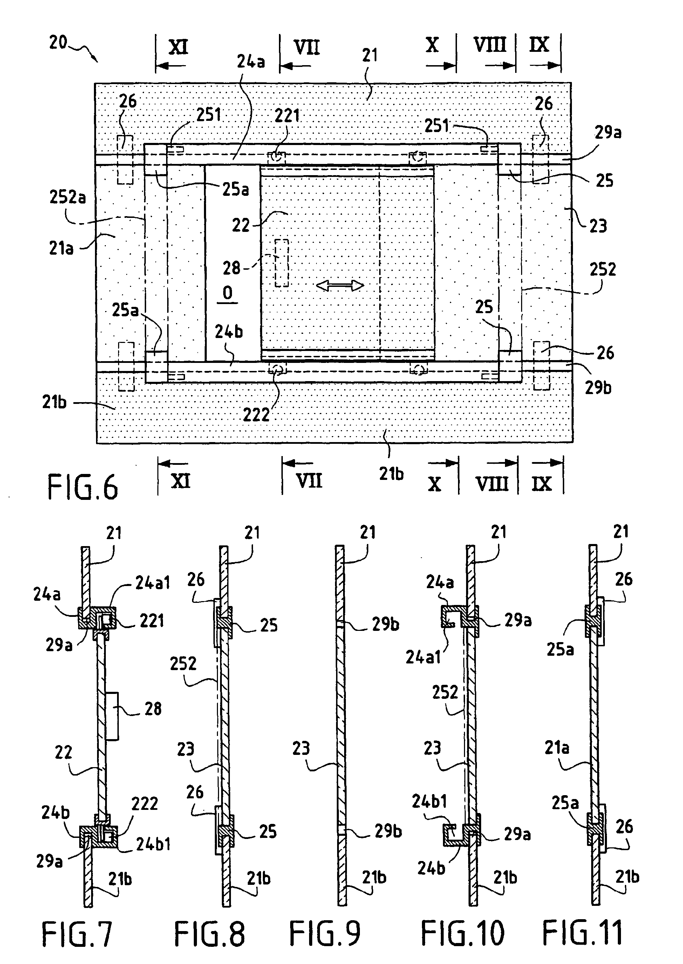

Un deuxième mode de réalisation de l'ensemble de fermeture selon l'invention est illustré sur les figures 6 à 11 et est constitué d'une version coulissante du volet mobile. Sur ces figures 6 à 11, les éléments qui correspondant à ceux déjà décrits en relation avec le premier mode de réalisation illustré sur les figures 1 à 5 portent comme signe de référence celui de l'élément correspondant du premier mode de réalisation, le premier chiffre 1 ayant été remplacé par un 2.

Comme il apparaît sur la figure 6, l'ensemble 20 de fermeture comprend le volet mobile 22 qui est destiné à venir refermer l'ouverture O délimitée par les quatre pièces constituant le panneau fixe : une pièce supérieure 21 et une pièce inférieure 21b s'étendant sur toute la longueur de l'ensemble 20, une pièce latérale gauche 21a et une pièce latérale droite 23.

Dans les dimensions réelles de l'ensemble 20, cette dernière pièce 23 est la plus grande et l'on doit considérer qu'elle est donc destinée à recouvrir la majeure partie de la surface de la baie.

Comme c'est cette dernière pièce 23 la plus grande, donc celle qui risque le plus de se briser, par analogie avec le premier mode de réalisation, on l'appelle première partie du panneau fixe tandis que les pièces 21, 21a et 21b forment ensemble la deuxième partie du panneau fixe.

De préférence, le volet 22 et les pièces 21, 21a, 21b et 23 sont des panneaux de verre.

Ici, la mobilité du volet 22 est possible par la présence de moyens de liaison formés de deux rails de guidage parallèles et horizontaux, respectivement supérieur 221 et inférieur 222, lesquels sont chacun solidaire d'un profilé, respectivement supérieur 24a et inférieur 24b montés de manière similaire.

Comme on le voit sur les figures 7 et 10, le profilé inférieur 24b (supérieur 24a) présente une portion avant ayant une section transversale en forme de U qui est chaussée (montage serré par chevauchement de la tranche) sur une partie de la longueur du bord supérieur (inférieur) de la pièce inférieure 21b (pièce supérieure 21). Le fond du U est garni d'un joint d'étanchéité 29a.

Egalement, les profilés inférieur 24b et supérieur 24a présentent une portion arrière réalisant un rail de guidage 24a1 et 24b1 sur toute leur longueur.

Le volet mobile 22 est équipé, le long de son bord supérieur et de son bord inférieur, d'au moins deux éléments coulissants ou roulants aptes à coopérer avec les rails de guidage 24a1 et 24b1. Sur les figures 6 et 7, sont représentés deux paires de galets 221 et 222 roulant dans les rails de guidage 24a1 et 24b1. Alternativement on peut prévoir des coulisseaux ou tout autre élément glissant.

Afin de permettre le déport suffisant du volet mobile 22 pour dégager complètement l'ouverture O dans la position d'ouverture du volet, la pièce latérale droite 23 est plus longue que le volet mobile 22 (dans la direction de la flèche de la figure 6) et les rails de guidage 24a1 et 24b1 s'étendent suffisamment vers la droite sur la figure 6.

Pour manoeuvrer le volet d'aération mobile 22, une poignée 28 est collée sur la face interne du volet mobile 22 (voir figures 6 et 7).

Le dispositif de sécurité est formé par quatre capots comprenant deux capots de gauche 25a (figure 6 et 11) et deux capots de droite 25 (figure 6 et 8) dont la section transversale porte une partie en forme de U qui est chaussée (montage serré par chevauchement de la tranche) sur le bord inférieur de la pièce inférieure 21b et sur le bord supérieur de la pièce supérieure 21.

Les capots 25 et 25a présentent une extrémité 251, dans la portion la plus éloignée de la périphérie du panneau fixe 21, 21a, 21b, 23, qui est fixée (montage serré) dans l'extrémité ouverte des profilés inférieur 24b et supérieur 24a, ce qui permet de solidariser les capots 25 et 25a à ces profilés inférieur 24b et supérieur 24a.

Les capots de droite 25 présentent une section transversale avec la partie en forme de U précitée qui se prolonge du côté de la pièce latérale droite 23 uniquement sur la face externe (voir figure 8), sans liaison avec la pièce latérale droite 23.

Les capots de gauche 25a présentent une section transversale avec la partie en forme de U précitée qui se prolonge du côté de la pièce latérale gauche 21a sur la face externe et sur la face interne (voir figure 11), afin de former une liaison serrée par chevauchement de son bord avec la pièce latérale gauche 21a.

De cette manière, en cas de bris de la pièce latérale droite 23 du panneau fixe, il y a une retenue entre la pièce supérieure 21, la pièce inférieure 21b et la pièce latérale gauche 21a du panneau fixe, le volet mobile 22, les profilés inférieur 24b et supérieur 24a et les capots 25, 25a.

De façon accessoire, quatre montants d'assemblage 26 (voir figures 6, 8 et 11) destinés à renforcer la cohésion entre les pièces 21, 21a, 21b et 23 du panneau fixe, au moins avant et pendant le montage de l'ensemble 20 sur un véhicule, sont collés verticalement sur la face interne des quatre pièces 21, 21a, 21b et 23 du panneau fixe, en les reliant deux à deux. Ces montants d'assemblage 26 sont situés de part et d'autre des profilés inférieur 24b et supérieur 24a et du volet mobile 22, à l'écart du dispositif de sécurité formé des capots 25 et 25a

Un mastic d'étanchéité (visible sur les figures 6 et 9) vient finir de refermer l'interstice existant entre les quatre pièces 21, 21a, 21b et 23 du panneau fixe en dehors de l'emplacement des profilés inférieur 24b et supérieur 24a et des capots 25 et 25a.

Les figures 6 à 11 illustrent une première alternative du deuxième mode de réalisation, dans laquelle la deuxième partie du panneau fixe est réalisée en trois pièces 21, 21a, 21b qui sont chacune adjacente à un côté différent de l'ouverture O et les profilés inférieur 24b et supérieur 24a sont montés de façon serrée sur le bord (sur le chant et les deux faces) de la deuxième partie du panneau fixe (les trois pièces 21, 21a, 21b) et non (voir figure 8) sur le bord de la première partie (pièce latérale droite 23) du panneau fixe.

Selon une deuxième alternative non illustrée du deuxième mode de réalisation, la première partie du panneau fixe et la deuxième partie du panneau fixe sont chacune réalisées en une seule pièce, l'un desdits profilés étant monté sur le chant de la première partie du panneau fixe, l'autre desdits profilés étant monté sur le chant de la deuxième partie du panneau fixe.

Cette deuxième alternative du deuxième mode de réalisation revient à considérer que, par exemple sur la figure 6, les pièces 21, 21a et 23 sont en fait formées d'un seul panneau en forme de U retourné constituant une première partie de panneau fixe, la deuxième partie du panneau fixe étant formée de la pièce inférieure 21b, le profilé supérieur 24a ayant la même longueur mais n'étant monté à cheval sur le bord inférieur de la pièce 21 que le long de l'ouverture O, le dispositif de sécurité n'étant alors présent qu'en bas du volet mobile 22.

Selon une autre façon de réaliser cette deuxième alternative du deuxième mode de réalisation, il faut considérer que, par exemple sur la figure 6, les pièces 21a, 21b et 23 sont en fait formées d'un seul panneau en forme de U constituant une première partie de panneau fixe, la deuxième partie du panneau fixe étant formée de la pièce supérieure 21 le profilé supérieur 24b ayant la même longueur mais n'étant monté à cheval sur le bord supérieur de la pièce 21b que le long de l'ouverture O, le dispositif de sécurité n'étant alors présent qu'en haut du volet mobile 22.

## Revendications

1. Ensemble de fermeture d'une baie (10, 20), en particulier une baie pratiquée dans la carrosserie d'un véhicule, comprenant un panneau fixe (11, 13 ; 21, 21a, 21b, 23) délimitant une ouverture (0) éloignée de la périphérie du panneau fixe, un volet mobile (12 ; 22) apte à venir obturer ladite ouverture (O), des moyens de liaison (141 ; 221) reliés au volet (12 ; 22) et au moins un profilé (142 ; 24a, 24b) solidaire du panneau, lesdits moyens de liaison (141 ; 221) coopérant avec ledit profilé (142 ; 24a, 24b) de façon que ledit volet (12 ; 22) se déplace entre une position de fermeture et une position d'ouverture, et un dispositif de sécurité
**caractérisé en ce**
**que ce** dispositif de sécurité (15, 15' ; 25, 25a ; 35, 36) destiné à permettre de retenir ensemble le volet (12 ; 22), lesdits moyens de liaison (141 ; 221), le profilé (142 ; 24a, 24b) et ledit panneau (11 ; 21, 21a, 21b), ledit profilé (142 ; 24a, 24b) étant monté par chevauchement serré sur le bord de l'ouverture en dépassant sur la face du panneau (13 ; 23) tournée vers l'extérieur du véhicule, et en ce que ledit dispositif de sécurité (15, 15' ; 25, 25a ; 35, 36) est solidaire d'une part du profilé (142 ; 24a, 24b) et d'autre part du panneau (11 ; 21, 21a, 21b).

2. Ensemble selon la revendication 1, **caractérisé en ce que** ledit panneau comporte au moins une première partie (13 ; 23) et une deuxième partie (11 ; 21, 21a, 21b), ladite première partie (13 ; 23) étant destinée à refermer la majeure partie de la surface de ladite baie, **en ce que** ledit profilé (142 ; 24a ; 24b) dépasse sur la face de la première partie (13 ; 23) du panneau tournée vers l'extérieur du véhicule et **en ce que** ledit dispositif de sécurité (15, 15' ; 25, 25a ; 35, 36) est solidaire de la deuxième partie du panneau (11 ; 21, 21a, 21b).

3. Ensemble (10) selon la revendication 1 ou 2, **caractérisé en ce que** dans sa position de fermeture, ledit volet (12) est dans le plan du panneau fixe (11, 13).

4. Ensemble (10, 20) selon l'une quelconque des revendications 2 et 3, **caractérisé en ce que** ledit dispositif de sécurité (15, 15' ; 25, 25a) est monté au moins sur la face extérieure de la deuxième partie (11; 21, 21a, 21b) du panneau et sur chaque extrémité dudit profilé (142; 24a, 24b).

5. Ensemble (10, 20) selon la revendication 4, **caractérisé en ce que** ledit dispositif de sécurité (15; 25, 25a) chevauche et enserre le bord de la deuxième partie (11 ; 21, 21b) du panneau.

6. Ensemble (10) selon la revendication 4, **caractérisé en ce que** ledit dispositif de sécurité (15') est collé sur la face de la deuxième partie (11) du panneau tournée vers l'extérieur du véhicule.

7. Ensemble (10, 20) selon l'une quelconque des revendications 2 à 6, **caractérisé en ce qu**'il comprend en outre des éléments d'assemblage (16; 26) reliant la première partie (13 ; 23) à ladite deuxième partie (11 ; 21, 21a, 21b) du panneau fixe, écartés dudit dispositif de sécurité (15, 15' ; 25, 25a) et dudit profilé (142 ; 24a, 24b), et montés sur la face du panneau fixe tournée vers l'intérieur du véhicule.

8. Ensemble (10) selon l'une quelconque des revendications 2 à 7, **caractérisé en ce que** lesdits moyens de liaison (141) forment la partie mobile d'une charnière (14) dont la partie fixe est formée par ledit profilé (142), lesdits moyens de liaison (141) chevauchant le bord de la deuxième partie (11) du panneau fixe.

9. Ensemble (20) selon l'une quelconque des revendications 2 à 7, **caractérisé en ce qu**'il comprend deux profilés (24a ;24b) parallèles montés par chevauchement serré sur le bord de l'ouverture (O), sur le bord de la première partie (23) du panneau fixe et/ ou de la deuxième partie (21, 21a, 21b) du panneau fixe, en formant deux rails de guidage (24a1 ;24b1), lesdits moyens de liaison comprenant au moins deux éléments coulissants ou roulants (221) montés sur deux bords parallèles du volet (22) et aptes à se déplacer dans lesdits rails de guidage (24al ;24bl).

10. Ensemble (20) selon la revendication 9, **caractérisé en ce que** la deuxième partie du panneau fixe est réalisée en trois pièces qui sont chacune adjacente à un côté différent de ladite ouverture et **en ce que** lesdits profilés sont montés de façon serrée sur le bord de la deuxième partie du panneau fixe.

11. Ensemble (20) selon la revendication 9, **caractérisé en ce que** la première partie du panneau fixe (13 ; 23) et la deuxième partie du panneau fixe (11 ; 21) sont réalisées en une seule pièce, l'un desdits profilés étant monté sur le bord de la première partie du panneau fixe, l'autre desdits profilés étant monté sur le bord de la deuxième partie du panneau fixe.

12. Ensemble (10, 30) selon l'une quelconque des revendications précédentes, **caractérisé en ce que** ledit dispositif de sécurité comporte une prolongation (152; 352) s'étendant en direction du bord supérieur du panneau, sur la face tournée vers l'intérieur du véhicule, au moins le long du volet mobile, ce par quoi on réalise le long de ladite prolongation (152 ; 352) un guidage d'un éventuel écoulement d'eau en direction dudit profilé (142 ; 24a, 24b).

13. Ensemble (30) selon la revendication 12, **caractérisé en ce que** ledit dispositif de sécurité (35) comporte, en outre, un tirant (353) s'étendant depuis ladite prolongation (152 ; 352) en direction du bord supérieur du panneau (11 ; 13) jusqu'à un premier élément d'accouplement (354), et un élément de retenue (36) disposé sur la face du panneau tournée vers l'extérieur du véhicule équipé d'un deuxième élément d'accouplement (361), un perçage (111) étant ménagé dans ledit panneau (11, 13), au travers duquel ledit premier élément d'accouplement (354) coopère avec ledit deuxième élément d'accouplement (361).

14. Ensemble (30) selon la revendication 13, **caractérisé en ce qu**'un perçage supplémentaire (112) est ménagé dans ledit panneau (113) et en ce que ledit élément de retenue (36) est équipé d'une saillie (362) apte à pénétrer dans ledit perçage supplémentaire (112).

15. Ensemble (30) selon la revendication 13 ou 14, **caractérisé en ce que** de la colle (37) est disposée entre ledit élément de retenue (36) et la face du panneau (11, 13) tournée vers l'extérieur.

## Claims

1. An assembly for closing a window opening (10, 20), in particular a window opening formed in the bodywork of a vehicle, comprising a fixed panel (11, 13; 21, 21a, 21b, 23) defining an orifice (0) remote from the periphery of the fixed panel, a mobile shutter (12; 22) capable of closing said orifice (0), connecting means (141; 221) connected to the shutter (12; 22) and at least one profile (142; 24a, 24b) integral with the panel, said connecting means (141; 221) cooperating with said profile (142; 24a, 24b) in such a way that said shutter (12; 22) moves between a closed position and an open position, and a safety device,
**characterised in that**
this safety device (15, 15'; 25, 25a; 35, 36) is intended to allow the shutter (12; 22), said connecting means (141; 221), the profile (142; 24a, 24b) and said panel (11; 21, 21a, 21b) to be held together, said profile (142; 24a, 24b) being mounted so as to straddle and grip the edge of the orifice and extending over the face of the panel (13; 23) facing towards the outside of the vehicle, and **in that** said safety device (15, 15' ; 25, 25a; 35, 36) is integral on the one hand with the profile (142; 24a, 24b) and on the other hand with the panel (11; 21, 21a, 21b).

2. An assembly according to claim 1, **characterised in that** said panel comprises at least one first part (13; 23) and one second part (11; 21, 21a, 21b), said first part (13; 23) being intended to close the majority of the surface area of said window opening, **in that** said profile (142; 24a; 24b) extends over the face of the first part (13; 23) of the panel facing the outside of the vehicle and **in that** said safety device (15, 15'; 25, 25a; 35, 36) is integral with the second part of the panel (11; 21, 21a, 21b).

3. An assembly (10) according to claim 1 or claim 2, **characterised in that**, in its closed position, said shutter (12) is in the plane of the fixed panel (11, 13).

4. An assembly (10, 20) according to either one of claims 2 and 3, **characterised in that** said safety device (15, 15'; 25, 25a) is mounted at least on the outer face of the second part (11; 21, 21a, 21b) of the panel and on each end of said profile (142; 24a, 24b).

5. An assembly (10, 20) according to claim 4, **characterised in that** said safety device (15; 25, 25a) straddles and grips the edge of the second part (11; 21, 21b) of the panel.

6. An assembly (10) according to claim 4, **characterised in that** said safety device (15') is glued to the face of the second part (11) of the panel facing the outside of the vehicle.

7. An assembly (10, 20) according to any one of claims 2 to 6, **characterised in that** it further comprises joining elements (16; 26) connecting the first part (13; 23) to said second part (11; 21, 21a, 21b) of the fixed panel, said elements being apart from said safety device (15, 15'; 25, 25a) and from said profile (142; 24a, 24b) and mounted on the face of the fixed panel facing the inside of the vehicle.

8. An assembly (10) according to any one of claims 2 to 7, **characterised in that** said connecting means (141) form the mobile part of a hinge (14), the fixed part of which is formed by said profile (142), said connecting means (141) straddling the edge of the second part (11) of the fixed panel.

9. An assembly (20) according to any one of claims 2 to 7, **characterised in that** it comprises two parallel profiles (24a; 24b) mounted so as to straddle and grip the edge of the orifice (O), the edge of the first part (23) of the fixed panel and/or of the second part (21, 21a, 21b) of the fixed panel, forming two guide rails (24a1; 24b1), said connecting means comprising at least two sliding or rolling elements (221) mounted on two parallel edges of the shutter (22) and capable of moving in said guide rails (24a1; 24b1) .

10. An assembly (20) according to claim 9, **characterised in that** the second part of the fixed panel is made in three pieces, which are each adjacent a different side of said orifice, and **in that** said profiles are mounted so as to grip the edge of the second part of the fixed panel.

11. An assembly (20) according to claim 9, **characterised in that** the first part of the fixed panel (13; 23) and the second part of the fixed panel (11; 21) are made in one piece, one of said profiles being mounted on the edge of the first part of the fixed panel, the other one of said profiles being mounted on the edge of the second part of the fixed panel.

12. An assembly (10, 30) according to any one of the preceding claims, **characterised in that** said safety device comprises an extension (152; 352) extending in the direction of the upper edge of the panel, on the face facing towards the inside of the vehicle, at least along the mobile shutter, by means of which any flow of water is guided along said extension (152; 352) in the direction of said profile (142; 24a, 24b).

13. An assembly (30) according to claim 12, **characterised in that** said safety device (35) further comprises a web (353) extending from said extension (152; 352) in the direction of the upper edge of the panel (11; 13) as far as a first coupling element (354), and a retaining element (36) disposed on the face of the panel facing the outside of the vehicle and equipped with a second coupling element (361), a hole (111) being formed in said panel (11, 13), through which said first coupling element (354) cooperates with said second coupling element (361).

14. An assembly according to claim 13, **characterised in that** a supplementary hole (112) is formed in said panel (113) and **in that** said retaining element (36) is equipped with a projection (362) capable of penetrating into said supplementary hole (112).

15. An assembly (30) according to claim 13 or claim 14, **characterised in that** glue (37) is disposed between said retaining element (36) and the face of the panel (11, 13) facing towards the outside.

## Patentansprüche

1. Vorrichtung zum Verschließen einer Öffnung (10, 20), insbesondere einer Öffnung in der Karosserie eines Fahrzeugs, umfassend eine ortsfeste Platte (11, 13, 21, 21a, 21 b, 23), die eine von der Peripherie der ortsfesten Platte entfernte Öffnung (O) umgibt, einen beweglichen Schieber (12, 22), der zum Verschließen der Öffnung (O) ausgelegt ist, mit dem Schieber (12, 22) verbundene Verbindungsmittel (141, 221) und wenigstens ein mit der Platte verbundenes Profil (142, 24a, 24b), wobei die Verbindungsmittel (141, 221) mit dem Profil (142, 24a, 24b) derart zusammenwirken, dass der Schieber (12, 22) sich zwischen einer Verschlussstellung und einer Öffnungsstellung hin- und herbewegt, sowie eine Schutzvorrichtung,
**dadurch gekennzeichnet, dass**
die Schutzvorrichtung (15, 15', 25, 25a, 35, 36) dazu dient, ein Zusammenhalten des Schiebers (12, 22), der Verbindungsmittel (141, 221), des Profils (124, 24a, 24b) sowie der Platte (11, 21, 21a, 21b) zu ermöglichen, wobei das Profil (142, 24a, 24b) durch einen überlappenden Presssitz dicht auf der Kante der Öffnung angeordnet ist und hierbei auf der der Außenseite des Fahrzeugs zugewandten Seite der Platte (13, 23) übersteht und die Schutzvorrichtung (15, 15', 25, 25a, 35, 36) zum einen mit dem Profil (142, 24a, 24b) und zum anderen mit der Platte (11, 21, 21 a, 21 b) verbunden ist.

2. Vorrichtung nach Anspruch 1,
**dadurch gekennzeichnet, dass**
die Platte wenigstens einen ersten Teil (13, 23) sowie einen zweiten Teil (11, 21, 21a, 21b) aufweist, wobei der erste Teil (13, 23) dazu dient, den größten Teil der Oberfläche der Öffnung zu verschließen, das Profil (142, 24a, 24b) auf der der Außenseite des Fahrzeugs zugewandten Seite des ersten Teils (13, 23) der Platte übersteht und die Schutzvorrichtung (15, 15', 25, 25a, 35, 36) mit dem zweiten Teil der Platte (11, 21, 21 a, 21 b) verbunden ist.

3. Vorrichtung (10) nach Anspruch 1 oder 2,
**dadurch gekennzeichnet, dass**
der Schieber (12) in seiner Verschlussstellung in der Ebene der ortsfesten Platte (11, 13) angeordnet ist.

4. Vorrichtung (10, 20) nach einem beliebigen der Ansprüche 2 oder 3,
**dadurch gekennzeichnet, dass**
die Schutzvorrichtung (15, 15', 25, 25a) wenigstens auf der Außenfläche des zweiten Teils (11, 21, 21a, 21 b) der Platte sowie an jedem Ende des Profils (142, 24a, 24b) befestigt ist.

5. Vorrichtung (10, 20) nach Anspruch 4,
**dadurch gekennzeichnet, dass**
die Schutzvorrichtung (15, 15', 25, 25a) im überlappenden Presssitz auf der Kante des zweiten Teils (11, 21, 21 a, 21 b) der Platte angeordnet ist.

6. Vorrichtung (10) nach Anspruch 4,
**dadurch gekennzeichnet, dass**
die Schutzvorrichtung (15') auf der der Außenseite des Fahrzeugs zugewandten Seite des zweiten Teils (11) der Platte aufgeklebt ist.

7. Vorrichtung (10) nach einem beliebigen der Ansprüche 2 bis 6,
**dadurch gekennzeichnet, dass**
die Vorrichtung weiterhin Verbindungsstücke (16, 26) umfasst, die den ersten Teil (13, 23) mit dem zweiten Teil (11, 21, 21 a, 21 b) der ortsfesten Platte verbinden, wobei diese von der Schutzvorrichtung (15, 15', 25, 25a) und dem Profil (142, 24a, 24b) beabstandet sind und auf der der Innenseite des Fahrzeugs zugewandten Seite der ortsfesten Platte befestigt sind.

8. Vorrichtung (10) nach einem beliebigen der Ansprüche 2 bis 7,
**dadurch gekennzeichnet, dass**
die Verbindungsmittel (141) den beweglichen Teil eines Gelenks (14) bilden, dessen ortsfester Teil durch das Profil (142) gebildet wird, wobei die Verbindungsmittel (141) im überlappenden Presssitz auf der Kante des zweiten Teils (11) der ortsfesten Platte angeordnet ist.

9. Vorrichtung (20) nach einem beliebigen der Ansprüche 2 bis 7,
**dadurch gekennzeichnet, dass**
die Vorrichtung zwei Profile (24a, 24b) umfasst, die durch einen überlappenden Presssitz auf der Kante der Öffnung (O), auf der Kante des ersten Teils (23) der ortsfesten Platte und/oder des zweiten Teils (21, 21a, 21 b) der ortsfesten Platte parallel zueinander befestigt sind und hierbei zwei Führungsschienen (24a1, 24b1) bilden, wobei die Verbindungsmittel wenigstens zwei gleitende oder rollende Elemente (221) umfassen, die auf den beiden parallelen Kanten des Schiebers (22) befestigt sind und dazu ausgelegt sind, sich in den Führungsschienen (24a1, 24b1) zu bewegen.

10. Vorrichtung (20) nach Anspruch 9,
**dadurch gekennzeichnet, dass**
der zweite Teil der ortsfesten Platte aus drei Teilen besteht, die sich jeweils an eine unterschiedliche Seite der Öffnung anschließen, wobei die Profile mittels Presssitz auf der Kante des zweiten Teils der ortsfesten Platte befestigt sind.

11. Vorrichtung (20) nach Anspruch 9,
**dadurch gekennzeichnet, dass**
der erste Teil der ortsfesten Platte (13, 23) und der zweite Teil der ortsfesten Platte (11, 21) aus einem einzelnen Stück bestehen, wobei eines der Profile auf der Kante des ersten Teils der ortsfesten Platte befestigt ist und das andere der Profile auf der Kante des zweiten Teils der ortsfesten Platte befestigt ist.

12. Vorrichtung (10, 30) nach einem beliebigen der vorangehenden Ansprüche,
**dadurch gekennzeichnet, dass**
die Schutzvorrichtung eine Verlängerung (152, 352) umfasst, die sich auf der der Innenseite des Fahrzeugs zugewandten Seite zumindest über die Länge des beweglichen Schiebers in Richtung der Oberkante der Platte erstreckt, wodurch entlang der Verlängerung (152, 352) eine Führung für einen möglichen Wasserstrom in Richtung des Profils (142, 24a, 24b) verwirklicht wird.

13. Vorrichtung (30) nach Anspruch 12,
**dadurch gekennzeichnet, dass**
die Schutzvorrichtung (35) weiterhin einen Zuganker (353), der sich entlang der Verlängerung (152, 352) in Richtung der Oberkante der Platte (11, 13) bis zu einem ersten Kupplungselement (354) erstreckt, sowie ein Rückhalteelement (36), das auf der der Außenseite des Fahrzeugs zugewandten Seite der Platte angeordnet ist und mit einem zweiten Kupplungselement (361) ausgestattet ist, umfasst, wobei in der Platte (11, 13) eine Bohrung (111) vorgesehen ist, durch die das erste Kupplungselement (354) mit dem zweiten Kupplungselement (361) zusammenwirkt.

14. Vorrichtung (30) nach Anspruch 13,
**dadurch gekennzeichnet, dass**
in der Platte (113) eine weitere Bohrung (112) vorgesehen ist, wobei das Rückhalteelement (36) mit einem Vorsprung (362) ausgestattet ist, der dazu ausgelegt ist, in die zusätzliche Bohrung (112) einzudringen.

15. Vorrichtung (30) nach den Ansprüchen 13 oder 14,
**dadurch gekennzeichnet, dass**
zwischen dem Rückhalteelement (36) und der der Innenseite des Fahrzeugs zugewandten Seite der Platte (11, 13) Klebstoff (37) angeordnet ist.
